# EUROPÄISCHE PATENTSCHRIFT

(11) **EP 4 009 009 B1**
(45) Veröffentlichungstag und Bekanntmachung des Hinweises auf die Patenterteilung: **14.09.2022**
(21) Anmeldenummer: 20212196.8
(22) Anmeldetag: 07.12.2020
(51) Int. Cl.: G01F 11/28, G01F 13/00, G01F 15/00, G01F 22/00, G01F 25/00, B67C 3/20, B67C 3/28

(54) **STEUERUNG EINES ABFÜLLVORGANGS**
CONTROL OF A BOTTLING PROCESS
COMMANDE D'UN PROCÉDÉ D'EMBOUTEILLAGE

(43) Veröffentlichungstag der Anmeldung: 08.06.2022
(73) Patentinhaber: SICK AG, 79183 Waldkirch (DE)
(72) Erfinder: Weber, Thomas, 77960 Seelbach (DE); Weigold, William, 79268 Bötzingen (DE)

(56) Entgegenhaltungen:
- EP-A1- 2 460 761
- WO-A1-00/02055
- WO-A1-2007/048742
- DE-A1- 10 149 473
- DE-A1-102008 016 296
- DE-A1-102014 107 364

## Beschreibung

Die Erfindung betrifft ein Verfahren zur Steuerung eines Abfüllvorgangs und eine Abfüllvorrichtung zum über ein Ventil gesteuerten Befüllen eines Behälters mit einem Medium nach dem Oberbegriff von Anspruch 1 beziehungsweise 13.

Abfüllanlagen werden in verschiedenen Bereichen wie Lebensmittel, Pharma, Kosmetik oder Chemie eingesetzt. Das abzufüllende Medium ist meist eine Flüssigkeit, wie ein Getränk oder auch eine Flüssigkeit, die kein Lebensmittel ist, wie Mineralöl oder dergleichen. Die Herausforderung besteht darin, die Mindestfüllmenge einzuhalten und zugleich möglichst wenig zu überschreiten. Daneben ist ein hoher und verlässlicher Durchsatz angestrebt.

Es gibt im Stand der Technik zahlreiche Ansätze, die abgefüllte Menge mit einem Sensor zu bestimmen. Mit einer Waage lässt sich die abgefüllte Masse direkt bestimmen, aber gerade für schnelle Prozesse ist das Wägen nicht gut geeignet, da durch die Bewegung der Abfüllmaschine Vibrationen auftreten, welche die Genauigkeit der Abfüllung begrenzen. Durch ein Höhenmessgerät oder eine Füllstandmessung wird die Abfüllhöhe ermittelt. Varianzen der Behälter schlagen sich hier jedoch in einem Fehler der Abfüllmenge nieder.

Deshalb wird alternativ in einer Zuleitung zu dem Behälter der Durchfluss gemessen. Dafür gibt es zahlreiche Messprinzipien, wie Coriolis-Sensoren, magnetisch-induktive Durchflusssensoren für Medien mit einer Mindestleitfähigkeit, Ultraschall-Durchflusssensoren oder Vortex-Sensoren. Denkbar ist weiterhin eine einfache, sensorlose Zeitsteuerung des Abfüllventils. Damit wird jedoch die Varianz im Strömungsverhalten nicht berücksichtigt. Außerdem erlaubt dies keine Kompensation der Alterung der Ventile und der Einflüsse auf das Schließverhalten und die Schließgeschwindigkeit.

Für einen genauen Abfüllvorgang wird deshalb das Ventil nicht einfach über die Zeit, sondern anhand einer Durchflussmessung gesteuert. Messfehler bei der Bestimmung des Durchflusses resultieren dann aber in einer entsprechend ungenau bestimmten abgefüllten Menge. Beispielsweise wird in der DE 10 2014 107 364 A1 ein Zeitpunkt zum Schließen eines Ventils, das zum Abfüllen dient, während des Abfüllvorgangs anhand einer erkannten Änderung der Durchflussrate korrigiert. Diese Korrektur bleibt jedoch unvollständig, da Messfehler und Rauschen der Durchflussrate unkompensiert bleiben und deshalb voll auf den Zeitpunkt durchschlagen.

Die DE 199 04 166 A1 blendet ihre aktuelle Durchflussmessung aus, wenn sich der elektrische Leitwert aufgrund einer hohen Partikelanzahl des Füllgutes stark ändert, und greift stattdessen auf bisher stattgefundene Dosiervorgänge zurück. Damit fehlt jedoch Messinformation für den aktuellen Abfüllvorgang, in dem sich ja sogar qua Voraussetzung das Medium recht stark verändert hat, und deshalb kommt es zu Ungenauigkeiten.

Aus der DE 10 2013 100 702 A1 ist ein Steuermodul für eine Abfüllanlage bekannt. Der Verlauf des Durchflusses durch eine jeweilige Füllstelle während eines Abfüllzyklus wird in Echtzeit erfasst. Durch Vergleich mit einem vordefinierten Sollverlauf werden Anomalien erkannt. Die gemessenen Abweichungen werden jedoch nicht für eine verbesserte Erfassung der abgefüllten Menge genutzt, sondern der Vergleich dient der Diagnose, um mit Anpassung von Abfüllparametern oder einem Abbruch der Abfüllung reagieren zu können. Der Sollverlauf würde auch nicht dabei helfen, die tatsächliche Abfüllmenge genauer zu bestimmen, das ginge nur anhand der tatsächlichen Messung, deren Messfehler jedoch in keiner Weise verbessert werden.

In der DE 10 2017 124 565 A1 wird eine Abfüllzeit aus einem Gesamtdurchfluss einer Vielzahl von Abfüllungen angepasst. Damit werden zwar Messfehler der Durchflussbestimmung von einzelnen Abfüllungen ausgemittelt, damit aber zugleich auch die tatsächlich vorhandene Varianz der einzelnen Abfüllung.

Die DE 10 2005 035 264 B4 bestimmt den Durchfluss mit einem neuronalen Netz und passt erforderlichenfalls Steuerdaten für die Steuerung oder Regelung einer Abfüllung an. Auch ein neuronales Netz kann nur die Messdaten bewerten, die es erhält, so dass Messfehler für die Durchflussrate weiterhin zu Ungenauigkeiten in der abgefüllten Menge führen.

Aus der DE 101 49 473 A1 ist ein Verfahren zum Abfüllen einer definierten Menge eines Mediums in einem Behältnis bekannt. Dabei wird die Kurvencharakteristik der momentanen Abfüllmenge in den verschiedenen Phasen des Abfüllvorgangs betrachtet. Eine mittels Durchflussmessgerät gemessene Abfüllmenge wird wiederholt mit einer berechneten Abfüllmenge verglichen, um ungewollte, plötzlich auftretende Änderungen der Füllmenge zu erkennen und darauf in einer Füllmengenregelung zu reagieren.

Es ist daher Aufgabe der Erfindung, eine genauere Steuerung eines Abfüllvorgangs zu ermöglichen.

Diese Aufgabe wird durch ein Verfahren zur Steuerung eines Abfüllvorgangs und eine Abfüllvorrichtung zum über ein Ventil gesteuerten Befüllen eines Behälters mit einem Medium nach Anspruch 1 beziehungsweise 13 gelöst. Die Abfüllmenge wird beispielsweise als Volumen vorgegeben, mit dem der Behälter mit dem Medium, insbesondere einer Flüssigkeit, befüllt werden soll. Vorzugsweise erfolgt eine Vielzahl von Abfüllvorgängen in eine entsprechende Vielzahl von Behältern parallel. Dabei wird der Durchfluss des Mediums beispielsweise in einer Zuleitung zu dem Behälter gemessen. Es entstehen Messdaten in Form von zeitlich aufeinanderfolgenden Messungen der momentanen Durchflussrate, d. h. eine Diskretisierung der Durchflussrate als Zeitreihe von Messwerten, was als Füllkurve oder Füllkennlinie bezeichnet werden kann. Daraus lässt sich die bereits abgefüllte Abfüllmenge bestimmen, sie ist das Integral der Durchflussrate seit Beginn des Abfüllvorgangs und dementsprechend in der diskretisierten Form die Summe der Zeitreihe unter Berücksichtigung der Messperiode der einzelnen Messwerte der Zeitreihe. Der Abfüllvorgang kann dann beendet werden, sobald die bereits abgefüllte Abfüllmenge die vorgegebene Abfüllmenge erreicht. Dabei wird vorzugsweise noch eine Nachlaufmenge von Medium berücksichtigt, das nach dem Beenden des Abfüllvorgangs noch in den Behälter strömen wird.

Die Erfindung geht von dem Grundgedanken aus, Messfehler der Messwerte für die momentane Durchflussrate aufgrund von Toleranzen, Rauschen verschiedener Quellen, wie elektronisches Rauschen oder Messwertschwankungen durch strömungsmechanische Effekte, und dergleichen aus der Historie mindestens einer früheren Messung auszugleichen. Dazu wird mindestens ein früherer Messwert herangezogen, um mindestens einen aktuellen Messwert zu korrigieren. Ein früherer Messwert als Teil der Historie ist ein Messwert für die Durchflussrate aus einer Zeitreihe eines früheren oder vorangegangenen, bereits abgeschlossenen Abfüllvorgangs, und dementsprechend ist ein aktueller Messwert ein Messwert aus der Zeitreihe von Messwerten für die momentane Durchflussrate des aktuellen Abfüllvorgangs. Die Korrektur basiert auf der Annahme, dass der Abfüllvorgang zumindest über einen gewissen Zeitraum aufeinanderfolgender Abfüllvorgänge ein weitgehend reproduzierbarer Prozess ist. Ungenauigkeiten werden vor allem aufgrund von Messrauschen der einzelnen Messwerte innerhalb einer Zeitreihe verursacht. Die aktuelle Zeitreihe wird aus der Historie verbessert und weist danach ein deutlich verringertes Messrauschen auf. Dank dieser Verbesserung wird es dann auch möglich, einen genaueren Wert der bereits abgefüllten Abfüllmenge zu schätzen.

Die Erfindung hat den Vorteil, dass eine besonders genaue Messung der abgefüllten Abfüllmenge ermöglicht wird. Das Abfüllprofil, also der Verlauf der Durchflussrate während des Abfüllvorgangs, kann praktisch beliebig sein, und es ist im Gegensatz zu manchen Ansätzen des Standes der Technik auch nicht erforderlich, es vorab zu kennen. Damit ist das erfindungsgemäße Verfahren deutlich flexibler und ohne spezifische manuelle Anpassung an den Abfüllprozess einsetzbar. Das gilt ebenso für Einflüsse eines steuerbaren Abfüllventils auf das Abfüllprofil, denn von einer bestimmten Ursache für eine Variation des Abfüllprofils ist die Erfindung unabhängig. Es wird ein nahezu beliebiges Rauschverhalten der Durchflussrate in Rauschspektrum und Rauschpegel kompensiert, so dass eine Kenntnis des spezifischen auftretenden Rauschens nicht erforderlich ist. Lediglich mittelwertfrei sollte das Rauschen sein, aber das ist bei einer Durchflussmessung üblicherweise gegeben und könnte ansonsten durch Kalibration ausgeglichen werden. In der Praxis treten oft beengte Einbaubedingungen auf, unter denen übliche Ein- und Auslaufstrecken eines den Durchfluss messenden Sensors nicht eingehalten werden können. Das demnach nicht oder nicht ausreichend beruhigte Strömungsprofil erzeugt dann ein erhöhtes Messrauschen. Die Erfindung mit ihrer Kompensation des Messrauschens erleichtert demnach auch Planung und Umsetzung eine Abfüllanlage.

Bevorzugt wird eine Gewichtung für den Beitrag des jeweiligen aktuellen Messwerts und dem für dessen Korrektur herangezogenen mindestens einen früheren Messwerts festgelegt. Beispielsweise werden aktuelle Messung und Historie untereinander gleich gewichtet, wobei aber zu der Historie mehrere frühere Messungen beitragen können und somit der Beitrag einer einzelnen früheren Messung kleiner wird als derjenige der aktuellen Messung. Die Gewichtung kann alternativ stärker zu der aktuellen Messung oder stärker zu der Historie verschoben werden. Außerdem ist auch innerhalb der früheren Messungen der Historie eine Gewichtung vorstellbar.

Der Abfüllvorgang wird bevorzugt durch das Öffnen mindestens eines Ventils begonnen und durch das Schließen des Ventils beendet. Somit ist der Abfüllvorgang ventilgesteuert, und mit dem Verfahren zur Steuerung des Abfüllvorgangs wird auf das Ventil eingewirkt. Insbesondere wird das Ventil geschlossen, sobald die geforderte Menge durchgeflossen ist, also die gemessene bereits abgefüllte Abfüllmenge, vorzugsweise zuzüglich einer noch erwarteten Nachlaufmenge, bis das Ventil nach der Ansteuerung zum Schließen tatsächlich vollständig sperrt, die vorgegebene Abfüllmenge erreicht.

Vorzugsweise wird der Beginn eines Abfüllvorgangs daran erkannt, dass die gemessene momentane Durchflussrate einen Anfangsschwellwert überschreitet. Um die Zeitreihen früherer Messungen und der aktuellen Messung richtig aufeinander beziehen zu können, sollten sie zu einem vergleichbaren Zeitpunkt mit ihrem ersten Messwert beginnen, oder jedenfalls sollte es einen gemeinsamen Bezugszeitpunkt geben, um die Messwerte sozusagen übereinander schieben zu können. Als Referenz eignet sich hier die steil ansteigende Flanke der Durchflussrate zu Beginn eines Abfüllvorgangs, die sich anhand eines Anfangsschwellwerts sehr verlässlich zeitlich lokalisieren lässt.

Die Korrektur des aktuellen Messwerts erfolgt bevorzugt anhand eines früheren Messwerts zu einem gleichen Zeitpunkt innerhalb der jeweiligen Zeitreihe, insbesondere bezüglich eines Beginns des Abfüllvorgangs. So wird ein aktueller Messwert mit früheren Messwerten zu einem gleichen Zeitpunkt innerhalb des jeweiligen Abfüllvorgangs der Messwerte korrigiert. Als Bezugspunkt für einen gleichen Zeitpunkt eignet sich der jeweilige Beginn des Abfüllvorgangs. Bei einem perfekt reproduzierbaren Abfüllvorgang und ideal fehlerfreier Durchflussmessung wären alle diese Messwerte gleich. Für eine Korrektur des Messrauschens können daher aus Messwerten zu einem gleichen Zeitpunkt innerhalb der Zeitreihen auch im Falle eines nur gut und nicht perfekt reproduzierbaren Abfüllvorgangs gute Ergebnisse erwartet werden. Die Messwerte zu einem gleichen Zeitpunkt innerhalb der jeweiligen Zeitreihe werden vorzugsweise ausschließlich herangezogen. Es ist auch möglich, zeitlich innerhalb der jeweiligen Zeitreihen benachbarte Messwerte mit zu berücksichtigen, dies dann jedoch vorzugsweise mit geringerem Gewicht.

Vorzugsweise wird eine Vielzahl von aktuellen Messwerten der Zeitreihe korrigiert, insbesondere sämtliche aktuellen Messwerte seit Beginn des Abfüllvorgangs. Die Korrektur auch nur eines aktuellen Messwerts aus einer Historie mit mindestens einem Messwert bringt bereits eine gewisse Erhöhung der Messgenauigkeit für die abgefüllte Abfüllmenge. Werden sogar viele oder alle aktuellen Messwerte der Zeitreihe korrigiert, so verbessert sich die Messgenauigkeit umso mehr. Werden mangels Rechenressourcen, Rechenzeit oder anderen Gründen einige aktuelle Messwerte nicht korrigiert, so kann das immer noch als eine Korrektur sämtlicher aktueller Messwerte nun im Rahmen des Möglichen oder Gewünschten aufgefasst werden.

Die Korrektur erfolgt vorzugsweise anhand einer vorgegebenen Vielzahl von Zeitreihen von früheren Messwerten der Durchflussrate einer Vielzahl von Abfüllvorgängen. Die Historie umfasst demnach in dieser Ausführungsform mehrere und nicht nur einen früheren Abfüllvorgang. Vorzugsweise sind es direkt vorangegangene Abfüllvorgänge, wie die letzten beiden, fünf, zehn, fünfzig oder dergleichen. Das muss aber nicht so sein, beispielsweise kann es sinnvoll sein, zumindest noch einige ältere oder viel ältere Abfüllvorgänge mit zu berücksichtigen

Die Korrektur wird bevorzugt aus einem statistischen Maß aus früheren Messwerten bestimmt, insbesondere einem Mittelwert oder einem Median. Das statistische Maß kann genutzt werden, um den aktuellen Messwert anzupassen, oder der aktuelle Messwert wird in das statistische Maß einbezogen, und das liefert dann den korrigierten aktuellen Messwert. Einige konkrete Beispiele sind Scharmittelung oder gleitender Mittelwert. Besonders bevorzugt gibt es eine Gewichtung, die beispielsweise mit dem Alter des früheren Abfüllvorgangs abnimmt. Alternativ differenziert eine Gewichtung nur zwischen aktueller und früherer Messung, wobei dann innerhalb der Historie alle Abfüllvorgänge gleichwertig beitragen.

Mindestens ein früherer Messwert wird vorzugsweise als Eingangswert eines Filters verwendet, und das Filter schätzt anhand früherer Messwerte und des aktuellen Messwerts einen korrigierten aktuellen Messwert. In dieser Ausführungsform werden die früheren Messwerte als Eingangswerte des Filters verwendet, das dann wiederum den aktuellen Messwert korrigiert. Das Filter wird vorzugsweise fortlaufend auf den jeweiligen aktuellen Messwert angewandt, der dann für die folgenden Abfüllvorgänge ein früherer Messwert ist. Es handelt sich insbesondere um ein FIR-Filter (Finite Impulse Response) oder ein IIR-Filter (Infinite Impulse Response).

Vorzugsweise werden anstelle früherer Messwerte Filterparameter und/oder Zwischengrößen gespeichert. Das Speichern einer Historie mit einer Vielzahl vollständiger Zeitreihen früherer Messwerte erfordert viel Speicherplatz. Das kann besonders dann problematisch werden, wenn das erfindungsgemäße Verfahren in dem Sensor zur Durchflussmessung mit sehr begrenzten Hardwareressourcen implementiert werden soll. In dieser bevorzugten Ausführungsform werden stattdessen nur Filterparameter oder Zwischengrößen früherer Filterungen gespeichert, die früheren Messwerte selbst können verworfen und müssen nicht gespeichert werden. Bei einem Filter geringer Ordnung, insbesondere erster Ordnung, müssen nur wenige Werte gespeichert werden, und dennoch kann auch eine längere Historie berücksichtigt werden.

Die Zeitreihe und mindestens eine frühere Zeitreihe werden bevorzugt zu einem 2D-Feld angeordnet und mit einem 2D-Filterkern bearbeitet, um den aktuellen Messwert zu korrigieren. Dafür werden die Zeitreihen als Zeilen eines 2D-Feldes übereinander angeordnet, wobei sie beispielsweise an einem Beginn des jeweiligen Abfüllvorgangs ausgerichtet sind. Dies ist nur eine Veranschaulichung, die tatsächliche Repräsentation in Zeilen, Spalten oder beliebiger sonstiger Form spielt letztlich keine Rolle. Nach den bisherigen Ausführungsformen erfolgte die Korrektur jeweils sozusagen spaltenweise und eindimensional aus früheren Messwerten, die innerhalb ihrer Zeitreihen am gleichen Zeitpunkt liegen wie der zu korrigierende aktuelle Messwert. In dieser bevorzugten Ausführungsform wird nun das 2D-Feld gemeinsam mit einem Filterkern bearbeitet, analog der Bildverarbeitung. Dadurch nehmen in gewünschter Weise je nach Auslegung des Filterkerns auch zeitlich benachbarte frühere und/oder aktuelle Messwerte Einfluss auf die Korrektur.

Der aktuelle Messwert und der korrigierte aktuelle Messwert werden bevorzugt miteinander verglichen, und bei einer Diskrepanz über eine Toleranzschwelle hinaus wird eine Gewichtung zwischen aktuellem Messwert und mindestens einem früheren Messwert verändert. Eine gewisse Korrektur im Rahmen des Messrauschens ist Sinn und Zweck der Erfindung. Wird jedoch die Abweichung sehr groß, gemessen beispielsweise an einer Abweichung um mehrere Standardabweichungen der Historie an diesem Zeitpunkt innerhalb des Abfüllvorgangs, so handelt es sich vermutlich nicht mehr lediglich um Messrauschen oder erwartete Driften, an die sich das Verfahren anpasst. Vielmehr deutet das auf einen echten Ausreißer hin. Das Verfahren kann hierauf reagieren, indem die Historie gegenüber der aktuellen Messung neu gewichtet wird. Bei über mehrere Abfüllvorgänge und/oder Messwerte hinweg bestehender Diskrepanz wurde möglicherweise der Abfüllvorgang verändert, oder es liegt ein grundsätzlicher Fehler vor und das Verfahren kann darauf mit einer Warnung hinweisen.

Aktuelle Messwerte in einer Anfangsphase und/oder Endphase des Abfüllvorgangs werden bevorzugt mit früheren Messwerten in einer Anfangsphase und/oder Endphase des Abfüllvorgangs verglichen, um das Ventil zu prüfen oder eine Nachlaufmenge zu bestimmen. In einer früheren bevorzugten Ausführungsform beginnen die Zeitreihen erst, wenn die Durchflussrate einen Anfangsschwellwert überschreitet. Die Messwerte aus dieser Phase können aber Informationen über den Zustand des Ventils liefern. Gleiches gilt für die Phase, in der das Ventil geschlossen wird. Als Ergebnis der Überwachung kann eine Nachlaufmenge neu berechnet oder eine Wartungsanforderung für das Ventil ausgegeben werden.

Eine erfindungsgemäße Abfüllvorrichtung zum über ein Ventil gesteuerten Befüllen eines Behälters mit einem Medium weist einen Durchflusssensor und eine Steuer- und Auswertungseinheit auf, die dafür ausgebildet ist, das Ventil zu schließen, sobald eine vorgegebene Abfüllmenge erreicht ist, und einen Zeitpunkt zum Schließen des Ventils anhand einer bereits abgefüllten Abfüllmenge festzulegen, die mit einem erfindungsgemäßen Verfahren bestimmt ist.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung einer Abfüllvorrichtung;
- Fig. 2: mehrere übereinander dargestellte Zeitreihen von Messwerten der Durchflussrate mehrerer Abfüllvorgänge;
- Fig. 3: mehrere Zeitreihen ähnlich Figur 2 mit zusätzlichem künstlichen Versatz in Y-Richtung zur Illustration einer Anordnung als 2D-Feld; und
- Fig. 4: ein vereinfachtes Ablaufdiagramm zur Korrektur von Messwerten aus einer Historie.

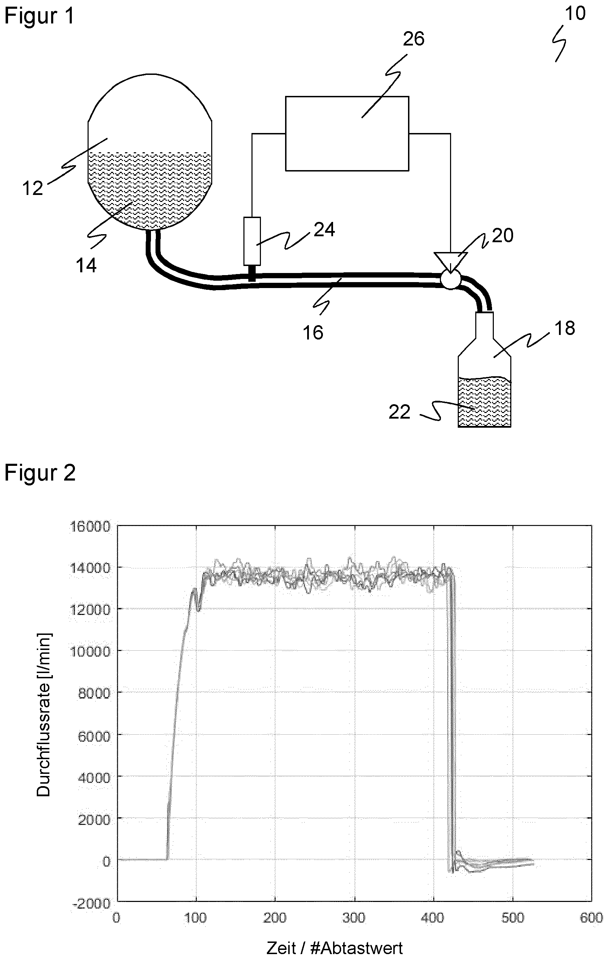

Figur 1 zeigt eine schematische Übersichtsdarstellung einer Abfüllvorrichtung 10. Aus einem Vorratsbehälter 12 strömt Medium 14 über eine Zuleitung 16 in einen Behälter 18. Das Medium 14 ist eine Flüssigkeit, beispielsweise ein Getränk, kann aber auch zähflüssig und allgemein ein beliebiges strömungsfähiges Medium sein. Als Behälter 18 ist eine Flasche dargestellt, die ebenfalls nur stellvertretend für beliebige, das Medium 14 aufnehmende Behälter steht. In der Praxis wird meist nicht nur ein einziger Behälter 18 gefüllt, sondern parallel eine Vielzahl von Behältern, so dass sich die gezeigte Anordnung an dem einen Vorratsbehälter 12 oder mit mehreren Vorratsbehältern in mehreren Abfüllsträngen vervielfacht.

Ziel eines Abfüllvorgangs ist es, eine genau vorgegebene Menge des Mediums 14 in den Behälter 18 zu füllen. Diese Vorgabe kann als Volumen angegeben sein, etwa genau 1 I, ebenso als Masse, die bei bekanntem Medium 14 über die Dichte zum Volumen proportional ist, oder eine sonstige geeignete Größe. Der Abfüllvorgang wird durch Öffnen eines Ventils 20 gestartet und durch dessen Schließen beendet. Um den richtigen Zeitpunkt zum Schließen des Ventils 20 zu finden, wird die bereits abgefüllte Menge 22 des Mediums 14 in dem Behälter 18 bestimmt. Diese Messung erfolgt indirekt, indem ein Durchflusssensor 24 die Durchflussrate in der Zuleitung 16 misst, also eine Menge oder eine Masse, die pro Zeiteinheit durch den Querschnitt der Zuleitung 16 strömt. Die Steuerung des Abfüllvorgangs erfolgt aus einer Steuer- und Auswertungseinheit 26, die an das Ventil 20 und den Durchflusssensor 24 angeschlossen ist. Die Steuer- und Auswertungseinheit 26 ist als eigener Block dargestellt, sie kann auch wenigstens partiell in den Durchflusssensor 24 integriert, beziehungsweise für eine Vielzahl paralleler Abfüllstränge zuständig sein.

Der Durchflusssensor 24 kann ein beliebiges Messprinzip verwirklichen, insbesondere einer der einleitend schon genannten Coriolis-Sensoren, magnetisch-induktive Durchflusssensoren für ein Medium 14 mit einer Mindestleitfähigkeit, Ultraschall-Durchflusssensoren oder Vortex-Sensoren sein. Das sogleich unter Bezugnahme auf die Figuren 2 bis 4 vorzustellende erfindungsgemäße Verfahren erhöht die effektive Messgenauigkeit der abgefüllten Menge 22 beispielsweise in Bezug auf Volumen oder Gewicht unabhängig davon, mit welchem physikalischen Prinzip die ursprüngliche Messung erfolgte. Es ist jedoch besonders vorteilhaft für Vortex-Sensoren, die prinzipbedingt eine sehr hohe Streuung aufweisen, durch ihre kostengünstige Realisierung für eine Abfüllvorrichtung 10 an sich aber sehr geeignet sind. Der bisher bestehende Nachteil der begrenzten Messgenauigkeit wird durch das erfindungsgemäße Verfahren zumindest zum Teil behoben.

Nicht die Durchflussrate, sondern die abgefüllte Menge 22 ist die eigentlich gesuchte Messgröße, also das Integral der Durchflussrate über den Zeitraum des Abfüllvorgangs. Einige bevorzugt eingesetzte Durchflusssensoren 24 bestimmen bereits die Durchflussmenge durch Multiplikation der Durchflussrate mit der Periode der Messrate und geben eine entsprechende Vielzahl von Pulsen aus, wobei jeder Puls einer bestimmten Menge wie beispielsweise 1 ml oder 1 g entspricht. Die vorgegebene Menge lässt sich in eine Anzahl solcher Pulse umrechnen, so dass durch Zählen der Impulse des Durchflussmesssensors 24 und Vergleich mit der Anzahl Pulse für die vorgegebene Menge der Zeitpunkt zum Schließen des Ventils 20 sehr einfach bestimmt werden kann. Andere Durchflussmesssensoren 24 haben einen Frequenzausgang, d.h. einen binären Ausgang, an dem die Wiederholfrequenz der Pulse der aktuellen Durchflussrate entspricht. Natürlich ist auch denkbar, Durchflussrate oder das Produkt aus Durchflussrate und Messperiode in anderer Form auszugeben, etwa als Zahlenwert. Zu beachten ist noch, dass mit der Ansteuerung des Ventils 20 das Strömen des Mediums 14 nicht sofort unterbunden wird. Das in dieser Phase beim Schließen des Ventils 20 nachströmende Medium 14 kann als Nachlaufmenge geschätzt oder aus früheren Messungen bestimmt und der Zeitpunkt zum Schließen entsprechend vorverlagert werden.

Figur 2 zeigt übereinander dargestellt beispielhafte Verläufe der von dem Durchflusssensor 24 gemessenen Durchflussrate für mehrere Abfüllvorgänge. Der Durchflusssensor 24 erzeugt Messwerte mit einer bestimmten Messwiederholrate und damit eine Zeitreihe von n Abtastwerten. Die jeweilige Identität #i, i=1... n des Abtastwertes ist auf der X-Achse, der zugehörige Messwert oder die momentane Durchflussrate auf der Y-Achse aufgetragen. Die Zeitreihen oder Verläufe sind auf der X-Achse am Beginn des Abfüllvorgangs oder demjenigen Zeitpunkt ausgerichtet, zu dem das Ventil 20 geöffnet wird. Dieser Beginn lässt sich mit einer Schwelle an der steigenden Anfangsflanke auffinden.

Es ist zu erkennen, dass die Abfüllvorgänge und damit die Zeitreihen der gemessenen Durchflussraten wenigstens über einige Abfüllvorgänge hinweg eine hohe Reproduzierbarkeit aufweisen. Voraussetzung ist natürlich, dass der Abfüllvorgang selbst nicht verändert wird, was sich beispielsweise so ausdrücken lässt, dass ein bestimmtes Medium 14 in einer bestimmten Abfüllvorrichtung 10 mit einem bestimmten Ventil 20 bei gegebener Temperatur und einem zumindest näherungsweise konstanten Füllstand und damit Druck im Vorratsbehälter 12 abgefüllt wird.

Die Zeitreihen sind aber auch bei gegebener Reproduzierbarkeit keineswegs untereinander identisch, sondern zeigen eine Varianz, die im Wesentlichen durch Messrauschen verursacht ist. Da der Abfüllvorgang selbst als unverändert vorausgesetzt ist, wird diese Varianz als Messfehler angesehen und erfindungsgemäß korrigiert. Grundlage für die Korrektur einer aktuell gemessenen Zeitreihe ist die Historie mindestens einer früher gemessenen Zeitreihe. Aus dieser Historie wird abgeleitet, welche Durchflussrate angesichts der Reproduzierbarkeit zu erwarten ist, und dieses Vorwissen nimmt über deren Korrektur Einfluss auf die aktuelle Messung.

Es ist denkbar, nur einzelne Messwerte zu korrigieren, also beispielsweise an dem Abtastwert #121, oder nur einen Teilbereich oder mehrere Teilbereiche der Zeitreihe. Das genaueste Ergebnis wird jedoch erzielt, wenn zahlreiche Messwerte und noch bevorzugter die gesamte Zeitreihe ab Öffnen des Ventils 20 bis zum Erreichen der vorgegebenen Menge mit Schließen des Ventils 20 korrigiert wird, und von diesem bevorzugten Fall wird im Folgenden vereinfachend ausgegangen.

In einer Ausführungsform wird mindestens eine Zeitreihe der Messwerte für die Durchflussrate während eines Abfüllvorgangs abgespeichert. Der Umfang der so gespeicherten Historie hängt einerseits von den verfügbaren Speicher-und Rechenkapazitäten ab, und andererseits sollte die Historie nur einen Zeitraum umspannen, in dem die Reproduzierbarkeit ausreichend gegeben ist. Unter dieser Abwägung können die letzten k Zeitreihen abgespeichert werden, k=1..100 oder mehr, wobei auch Lücken gerade mit zunehmendem Alter der früheren Zeitreihen vorstellbar sind.

Aus dieser Historie werden dann jeweils die aktuellen Messwerte für die Durchflussrate korrigiert. Der Korrektur des aktuellen Messwerts #i zu einem bestimmten Zeitpunkt innerhalb der Zeitreihe liegen vorzugsweise die bezüglich der jeweiligen Zeitreihe zeitgleichen früheren Messwerte #i zugrunde. Dazu wird bevorzugt ein statistisches Maß berechnet, wie ein Mittelwert oder ein Median. In diesem statistischen Maß können der aktuellen Messung und den früheren Messungen unterschiedliche Gewichte gegeben werden, wobei die früheren Messungen in sich ebenfalls gleich oder unterschiedlich gewichtet werden können, beispielsweise durch ein abnehmendes Gewicht mit zunehmendem Alter.

Gerade bei einer sehr hohen Zeitauflösung des Durchflusssensor 24 und damit vielen Messwerten je Zeitreihe und/oder einer langen Historie mit vielen berücksichtigten früheren Abfüllvorgängen entsteht ein hoher Speicherbedarf und Rechenaufwand. Es ist daher vorteilhaft, die Historie nicht vollständig zu speichern, sondern kontinuierlich in Parameter einer Korrektur einfließen zu lassen. Eine einfache Implementierung dieser Art ist ein gleitender Mittelwert, der die Historie je Messwert #i in einem einzigen Wert zusammenfasst.

Eine komplexere und besser anpassbare Möglichkeit der Implementierung verwendet ein Filter, insbesondere ein IIR-Filter (Infinite Impulse Response) oder ein FIR-Filter (Finite Impulse Response), das jeweils je Zeitpunkt innerhalb der Zeitreihe oder Abtastwert #i aus der jeweiligen Historie parametriert wird. Mit einem geeigneten Filter n-ter Ordnung, etwa einem IIR-Filter, müssen dann unabhängig vom Umfang der Historie nur n Parameter je Messwert gespeichert werden, insbesondere nur je ein Parameter bei einem Filter erster Ordnung. Bei einem IIR-Filter müssen abhängig von der Historie auch mehr Werte gespeichert werden, aber es kann immer noch gelingen, die Historie dadurch komprimiert zu speichern. Das Filter parametriert sich nach und nach anhand der jeweils aktuellen Zeitreihen, die dann für spätere Abfüllvorgänge die Historie bilden. Die Parametrierung des Filters bleibt fortlaufend durch die jeweils aktuelle Zeitreihe angepasst.

Je nach konkretem Abfüllvorgang können unterschiedliche vorteilhafte Gewichtungen aus aktuellen und historischen Messwerten der Zeitreihen eingestellt werden. Eine höhere Gewichtung der Historie bringt eine Verbesserung der Genauigkeit der Abfüllung, da das Messrauschen des jeweiligen Messwerts besser korrigiert wird. Allerdings steigen damit zugleich die Anforderungen an die Reproduzierbarkeit des Abfüllprozesses. Bei einer Analyse der Impulsantwort eines IIR-Filters der ersten Ordnung mit einer je hälftigen Gewichtung von aktueller Zeitreihe und Historie der früheren Zeitreihen zeigt sich, dass nach sieben Abfüllvorgängen praktisch kein Einfluss mehr vorhanden ist. Über die Dauer von sieben Abfüllvorgängen kann von einer guten Reproduzierbarkeit ausgegangen werden. Mit einer verschobenen Gewichtung beziehungsweise einem komplexeren Filter insbesondere höherer Ordnung kann die Historie auch längeren Einfluss nehmen.

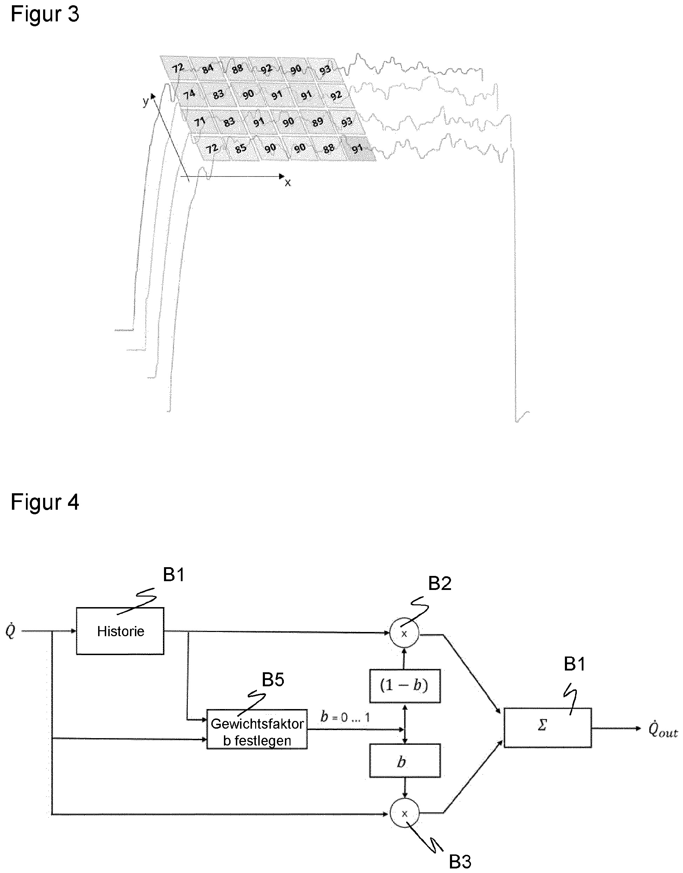

Figur 3 ist eine Illustration zur Erläuterung einer alternativen Filterung der Historie und der aktuellen Messung der Durchflussrate. Ähnlich wie in Figur 2 sind hier mehrere Zeitreihen von Messwerten der Durchflussrate zu mehreren Abfüllvorgängen gezeigt. Die Verläufe sind in der zusätzlichen y-Richtung gegeneinander versetzt. Es wird also eine zweidimensionale diskrete Funktion oder ein 2D-Feld von Messwerten gebildet. Auf der X-Achse ist weiterhin die Zeit aufgetragen, die zusätzliche Y-Achse codiert diskret die Identität des jeweiligen Abfüllvorgangs. In diesem durch X und Y gegebenen 2D-Feld wird der jeweilige Messwert gespeichert, der in Figur 3 auf der Z-Achse aufgetragen ist.

Diese zweidimensionale Struktur der Messdaten entspricht einem in Pixel aufgelösten Bild. In den bisher zu Figur 2 erläuterten Ausführungsformen findet die Korrektur oder Filterung gleichsam nur spaltenweise und eindimensional für dieselbe X-Position an dem Abtastwert #i innerhalb seiner jeweiligen Zeitreihe statt. In einer vorteilhaften Erweiterung können jedoch auch statistische Maße in zwei Richtungen bestimmt beziehungsweise 2D-Filterkerne ähnlich wie in der Bildverarbeitung angewandt werden. Damit erfolgt die Korrektur nicht mehr nur punktweise aus der unmittelbaren Vergangenheit genau dieses Messwerts, sondern je nach 2D-Filterkern auch aus zeitlich benachbarten Messwerten und/oder deren Historie.

So lassen sich durch statistische Methoden beispielsweise ein Mittelwert und eine Standardabweichung in X- Richtung und in Y-Richtung ermitteln und dadurch entscheiden, in welche Zeitreihe ein aktueller Messwert am besten passt. Mit dieser Information kann beispielsweise eine Gewichtung der Historie oder eines bestimmten Teils der Historie gegenüber der aktuellen Messung angepasst werden. Allgemein ergibt sich die Möglichkeit, zwischen einer Filterung in y-Richtung und einer Filterung in x-Richtung zu wählen oder auch beide zu kombinieren, insbesondere anhand einer statistischen Zuordnung des aktuellen Messwerts. Das ermöglicht noch genauere Korrekturen und eine verbesserte Reaktion auf Änderungen im Abfüllvorgang.

Figur 4 zeigt ein vereinfachtes, beispielhaftes Ablaufdiagramm zur Korrektur von Messwerten der Durchflussrate aus einer Historie sowie zur Anpassung der Gewichtung zwischen aktueller Messung und früheren Messungen. Eingangswert ist der jeweilige aktuelle Messwert *Q̇* für die Durchflussrate, Ausgangswert *Q̇ₒᵤₜ* der korrigierte Messwert. In einem Block B1 wird die Historie berücksichtigt und durch die aktuelle Messung modifiziert, beispielsweise werden statistische Maße berechnet oder Filterparameter angepasst. Das wurde oben in verschiedenen Ausführungsformen erläutert. Über einen Block B2 wird die Historie, über einen Block B3 der aktuelle Messwert *Q̇* mit b beziehungsweise dessen Komplement 1-b gewichtet. Beides wird in einem Block B4 zu dem Ausgangswert *Q̇ₒᵤₜ* kombiniert.

Es gibt nun verschiedene Zustände, die in einem Block B5 eine Veränderung der Gewichtung erfordern. Zunächst gibt es direkt beim Einschalten noch keine Historie, und vorteilhaft wird anfangs nur der aktuelle Messwert mit b=1 verwendet. Mit dem Aufbau einer Historie gewinnt diese zunehmend an Gewicht bis hin zu der vorgesehenen Gewichtung b zum Ende der Einschwingphase.

Im eingeschwungenen Betrieb sind Messrauschen, Driften durch erwartbare Prozessänderungen und ungewöhnliche Ereignisse zu unterscheiden. Bleibt die Abweichung im erwarteten Rauschband, so wird erfindungsgemäß korrigiert und die Gewichtung beibehalten. Einer ungewöhnlich starken Abweichung zwischen aktuellem Messwert und Historie, beispielsweise gemessen an einem Vielfachen der Standardabweichung der Historie, kann durch höhere Gewichtung der aktuellen Messung Rechnung getragen werden. Das betrifft beispielsweise Änderungen in Temperatur oder Druck im Vorratsbehälter 12 durch bisherige Entnahme von Medium 14. Prozessänderungen und ungewöhnliche Ereignisse können ebenso mittels eines Kalman Filters geschätzt werden, welcher zuvor den Zustand des aktuellen Messwertes mit Hilfe einer bekannten Rauschverteilung beurteilt.

Treten jedoch Abweichungen auf, die physikalisch aufgrund der Fluiddynamik nicht mehr zu erklären sind, ist also eine Änderung größer als eine Schwelle für |*Q̈*|, so handelt es sich vermutlich um Störeinflüsse, wie Blasen im System, Vibrationen oder sonstiges. Hier kann umgekehrt die Historie stark gewichtet und der offenbar fehlerhafte aktuelle Messwert nicht in die Historie aufgenommen werden. Es kann auch eine Warnung ausgegeben werden, insbesondere wenn Diskrepanzen zwischen Historie und aktueller Messung sich nicht auflösen.

Es ist denkbar, den Gewichtungsfaktor auch von den Messungen zusätzlicher Sensoren abhängig zu machen. Eine Änderung beispielsweise in Druck oder Temperatur erfassen möglicherweise auch andere Sensoren der Abfüllvorrichtung 10 einschließlich anderer Durchflusssensoren. Bei einer Koinzidenz solcher von weiteren Sensoren gemeldeten Änderungen und einer Diskrepanz zwischen Historie und aktueller Messung darf der aktuellen Messung stärker vertraut werden, da die Historie offensichtlich unter anderen Bedingungen entstanden ist. Die Vernetzung zwischen dem Durchflusssensor 24 und weiteren Sensoren kann durch eine Sensor-zu-Sensor-Kommunikation erfolgen oder übergeordnet vermittelt werden, sei es durch Anschluss des weiteren Sensors an die Steuer- und Auswertungseinheit 26 oder ein Netzwerk einschließlich einer Cloud. Latenzen spielen hier eine untergeordnete Rolle, denn die erforderlichen Reaktionszeiten liegen eher nur im Sekundenbereich.

Einige Aspekte des erfindungsgemäßen Verfahrens wurden in der bisherigen Beschreibung nur angerissen oder noch gar nicht angesprochen, und diese sollen nun abschließend vertieft werden.

Um einen aktuellen Messwert aus seiner Historie korrigieren zu können, müssen die Zeitreihen zeitlich zueinander ausgerichtet werden, wie dies in Figur 2 auch dargestellt ist. Dafür ist ein geeigneter Bezugszeitpunkt zu wählen, insbesondere als Auslösezeitpunkt für die Erfassung und Speicherung von Messwerten, so dass die Zeitreihen von vorneherein in richtigem Zeitbezug erfasst werden, ohne sie alternativ erst im Nachhinein zueinander zeitlich auszurichten. Ein geeigneter Auslösezeitpunkt wird durch die steigende Flanke in Figur 2 zu Beginn des Abfüllvorgangs vorgegeben.

Dafür kann ein Anfangsschwellwert definiert werden. Dieser ist einerseits hoch genug zu wählen, damit unter Nullfluss vor dem Abfüllvorgang verlässlich keine Fehlauslösung erfolgt. Andererseits sollte der Anfangsschwellwert auch klein genug sein, damit ein früher Bereich der Flanke erfasst wird, der möglichst steil und wenig vom Messrauschen, sondern primär dem Abfüllvorgang selbst bestimmt ist. In Figur 2 wäre das ein Anfangsschwellwert um 1000, der weit außerhalb eines Rauschbandes vor dem Zeitpunkt des Öffnens des Ventils 20 und noch nicht in dem potentiell stärker rauschbehafteten langsamer steigenden Teil der Flanke liegt.

Prinzipiell kann in ähnlicher Weise statt auf den Beginn des Abfüllvorgangs auch auf die fallende Flanke am Ende des Abfüllvorgangs ausgerichtet werden. Das allerdings geht nur im Nachhinein mit den gespeicherten Zeitreihen, da natürlich das Ende des Abfüllvorgangs im Gegensatz zum Beginn des Abfüllvorgangs nicht als Auslöser zum Aufzeichnen von Messwerten herangezogen werden kann.

Als ein weiterer Aspekt ist zu bedenken, dass der Abfüllvorgang und die Erfassung der Durchflussrate zeitlich nicht zusammenhängende Prozesse, also asynchrone Prozesse darstellen. Um ein gutes Ergebnis zu erzielen, sollte die Zeitauflösung der Durchflussmessung einen Mindestwert haben, da ansonsten insbesondere bei einer hohen Änderung der Durchflussrate beim Öffnen und Schließen des Ventils 20 die Korrektur der aktuellen Messwerte aus der Historie zusätzliche Fehler liefern kann. Alternativ kann das Verfahren in Zeitabschnitten mit konstantem Durchfluss eingesetzt werden, da hier der zeitliche Zusammenhang weniger kritisch ist.

Eine Initialphase des erfindungsgemäßen Verfahrens wurde im Zusammenhang mit Figur 4 schon kurz erwähnt. Für einen ersten Abfüllvorgang liegt noch keine Historie vor. Es wird hier zunächst so gewichtet, dass nur die aktuellen Messwerte Einfluss haben. Aus dem ersten Abfüllvorgang oder den ersten Abfüllvorgängen wird dann die Historie aufgebaut und insbesondere die Filterkette vorbelegt, so dass ab dem zweiten Abfüllvorgang bereits eine Korrektur möglich ist, die sich weiter verbessert, bis genügend Abfüllvorgänge abgeschlossen sind, um die vorgesehene Historie aufzufüllen.

Es ist denkbar, die Historie eines eingespielten Abfüllvorgangs in einem persistenten Speicher abzulegen, damit beispielsweise nach einer kurzen Spannungsunterbrechung mit gleicher Güte weitergearbeitet werden kann. Diese Speicherung kann auch gemeinsam mit Rahmenbedingungen wie der abzufüllende Menge, der Art des Mediums 14, der Temperatur und dem Druck als eine Art Rezeptur erfolgen. Soll dann später unter gleichen Rahmenbedingungen abgefüllt werden, so kann die Initialphase zur Vorbelegung der Filter beim ersten Aufbau einer Historie entfallen und stattdessen die abgespeicherte Historie geladen werden.

Um die Unsicherheit in einer Initialphase auszugleichen und in jedem Fall das Abfüllen der gesetzlich vorgeschriebenen Mindestmenge zu garantieren, kann zunächst vorsichtshalber die bereits abgefüllte Menge 22 absichtlich um eine Toleranz unterschätzt werden. Mit aus der wachsenden Historie gewonnenen Wissen, beispielsweise einer Standardabweichung für die bereits abgefüllte Menge 22, kann diese Unterschätzung dann nach und nach zurückgenommen werden.

Eine Historie führt nur so lange zu sinnvollen Korrekturen, wie sich an der Abfüllsituation nichts Entscheidendes ändert. Dem kann allgemein mit einer Veränderung der Gewichtung begegnet werden, wie oben zu Figur 4 diskutiert. Ein besonderes Problem ergibt sich aber noch, wenn die Durchflussrate sinkt und der Abfüllvorgang sich damit verlängert. Dann überlagern sich gegen Ende der Zeitreihen die fallende Flanke am Ende des bisherigen Abfüllvorgangs der Historie und die noch hohe Durchflussrate der aktuellen Messung. Das ergibt keine sinnvolle Vermischung, und der aktuelle Messwert sollte stärker gewichtet oder ausschließlich verwendet und eine neue Historie aufgebaut werden. Ähnliche Probleme ergeben sich bei steigender Durchflussrate und einem sich verkürzenden Abfüllvorgang.

Als weiterer Aspekt können die Zeitreihen genutzt werden, um das Ventil 20 zu überwachen. Das Öffnungs- und Schließverhalten kann sich durch mechanischen Verschleiß und dergleichen ändern, und dies schlägt sich in Änderungen der Messwerte in den Zeitreihen zu Beginn und am Ende des Abfüllvorgangs nieder. Daraus können Diagnoseinformationen für die Anlagensteuerung zur Verfügung gestellt werden.

Je nach Zeitauflösung des Durchflusssensor 24 werden bei schnell öffnendem und schließendem Ventil 20 womöglich nur sehr wenige Messwerte oder gar nur ein einziger Messwert in den Flanken erfasst. Da aber Abfüllvorgang und Durchflussmessung asynchron zueinander sind, werden von Abfüllvorgang zu Abfüllvorgang mit der Historie unterschiedliche Positionen der Flanke abgetastet. Somit kann dank der Historie das Öffnungs- und Schließverhalten doch untersucht und beispielsweise eine Nachlaufmenge bestimmt werden.

In einem Messaufbau wurde die mit dem erfindungsgemäßen Verfahren bestimmte bereits abgefüllte Menge 22 mit der über eine Waage bestimmten tatsächlichen bereits abgefüllten Menge 22 verglichen. Dabei wurden die Messwerte jeweils durch ein Filter erster Ordnung korrigiert und in zwei Auswertungen eine Gewichtung zwischen aktueller Messung und Historie von 50/50 und 30/70 verwendet. Die Standardabweichung des relativen Fehlers verbessert sich bei Gewichtung 50/50 von 0,66% auf 0,45%, d.h. Verringerung um Faktor 0,68 und bei 30/70 Gewichtung sogar auf 0,40%, und das entspricht einer Verringerung um einen Faktor 0,6.

## Patentansprüche

1. Verfahren zur Steuerung eines Abfüllvorgangs, bei dem eine vorgegebene Abfüllmenge eines Mediums (14) in einen Behälter (18) abgefüllt wird, wobei der Durchfluss des in den Behälter (18) strömenden Mediums (14) als Zeitreihe von Messwerten für die momentane Durchflussrate gemessen und daraus die bereits abgefüllte Abfüllmenge (22) geschätzt wird,
**dadurch gekennzeichnet,**
**dass** mindestens ein aktueller Messwert der Zeitreihe anhand mindestens eines früheren Messwerts einer früheren Zeitreihe von Messwerten der Durchflussrate eines früheren Abfüllvorgangs korrigiert wird.

2. Verfahren nach Anspruch 1,
wobei der Abfüllvorgang durch das Öffnen mindestens eines Ventils (20) begonnen und das Schließen des Ventils (20) beendet wird.

3. Verfahren nach Anspruch 1 oder 2,
wobei der Beginn eines Abfüllvorgangs daran erkannt wird, dass die gemessene momentane Durchflussrate einen Anfangsschwellwert überschreitet.

4. Verfahren nach einem der vorhergehenden Ansprüche,
wobei die Korrektur des aktuellen Messwerts anhand eines früheren Messwerts zu einem gleichen Zeitpunkt innerhalb der jeweiligen Zeitreihe erfolgt, insbesondere bezüglich eines Beginn des Abfüllvorgangs.

5. Verfahren nach einem der vorhergehenden Ansprüche,
wobei eine Vielzahl von aktuellen Messwerten der Zeitreihe korrigiert werden, insbesondere sämtliche aktuellen Messwerte seit Beginn des Abfüllvorgangs.

6. Verfahren nach einem der vorhergehenden Ansprüche,
wobei die Korrektur anhand einer vorgegebenen Vielzahl von Zeitreihen von früheren Messwerten der Durchflussrate einer Vielzahl von Abfüllvorgängen erfolgt.

7. Verfahren nach einem der vorhergehenden Ansprüche,
wobei die Korrektur aus einem statistischen Maß aus früheren Messwerten bestimmt wird, insbesondere einem Mittelwert oder einem Median.

8. Verfahren nach einem der vorhergehenden Ansprüche,
wobei mindestens ein früherer Messwert als Eingangswert eines Filters verwendet wird, insbesondere eines FIR- oder eines IIR-Filters, und das Filter anhand früherer Messwerte und des aktuellen Messwerts einen korrigierten aktuellen Messwert schätzt.

9. Verfahren nach Anspruch 8,
wobei anstelle früherer Messwerte Filterparameter und/oder Zwischengrößen gespeichert werden.

10. Verfahren nach einem der vorhergehenden Ansprüche,
wobei die Zeitreihe und mindestens eine frühere Zeitreihe zu einem 2D-Feld angeordnet und mit einem 2D-Filterkern bearbeitet werden, um den aktuellen Messwert zu korrigieren.

11. Verfahren nach einem der vorhergehenden Ansprüche,
wobei der aktuelle Messwert und der korrigierte aktuelle Messwert miteinander verglichen werden und bei einer Diskrepanz über eine Toleranzschwelle hinaus eine Gewichtung zwischen aktuellem Messwert und mindestens einem früheren Messwert verändert wird.

12. Verfahren nach einem der vorhergehenden Ansprüche,
wobei aktuelle Messwerte in einer Anfangsphase und/oder Endphase des Abfüllvorgangs mit früheren Messwerten in einer Anfangsphase und/oder Endphase des Abfüllvorgangs verglichen werden, um das Ventil (20) zu prüfen oder eine Nachlaufmenge zu bestimmen.

13. Abfüllvorrichtung zum über ein Ventil (20) gesteuerten Befüllen eines Behälters (18) mit einem Medium (14), die einen Durchflusssensor (24) und eine Steuer- und Auswertungseinheit (26) aufweist, die dafür ausgebildet ist, das Ventil (20) zu schließen, sobald eine vorgegebene Abfüllmenge erreicht ist,
**dadurch gekennzeichnet,**
**dass** die Steuer- und Auswertungseinheit (26) den Zeitpunkt zum Schließen des Ventils (20) anhand einer bereits abgefüllten Abfüllmenge (22) festlegt, die mit einem Verfahren nach einem der vorhergehenden Ansprüche bestimmt ist.

## Claims

1. A method for controlling a filling process, wherein a predetermined filling quantity of a medium (14) is filled into a container (18), the flow rate of the medium (14) flowing into the container (18) being measured as a time series of measured values for the instantaneous flow rate and the filling quantity (22) already filled being estimated therefrom,
**characterized in that** at least one current measured value of the time series is corrected on the basis of at least one earlier measured value of an earlier time series of measured values of the flow rate of an earlier filling process.

2. The method according to claim 1,
wherein the filling process is started by opening at least one valve (20) and is ended by closing the valve (20).

3. The method according to claim 1 or 2,
wherein the start of a filling process is recognized by the fact that the measured instantaneous flow rate exceeds an initial threshold value.

4. The method according to any of the preceding claims,
wherein the correction of the current measured value is carried out on the basis of an earlier measured value at an identical point in time within the respective time series, in particular with regard to a start of the filling process.

5. The method according to any of the preceding claims,
wherein a plurality of current measured values of the time series are corrected, in particular all current measured values since the beginning of the filling process.

6. The method according to any of the preceding claims,
wherein the correction is performed using a predetermined plurality of time series of earlier measured values of the flow rate of a plurality of filling operations.

7. The method according to any of the preceding claims,
wherein the correction is determined from a statistical measure from earlier measured values, in particular a mean value or a median.

8. The method according to any of the preceding claims,
wherein at least one earlier measured value is used as an input value of a filter, in particular an FIR or an IIR filter, and the filter estimates a corrected current measured value on the basis of earlier measured values and the current measured value.

9. The method according to claim 8,
wherein filter parameters and/or intermediate variables are stored instead of earlier measured values.

10. The method according to any of the preceding claims,
wherein the time series and at least one earlier time series are arranged into a 2D field and processed with a 2D filter kernel to correct the current measured value.

11. The method according to any of the preceding claims,
wherein the current measured value and the corrected current measured value are compared with each other and, in the event of a discrepancy exceeding a tolerance threshold, a weighting between the current measured value and at least one earlier measured value is adapted.

12. The method according to any of the preceding claims,
wherein current measured values in an initial phase and/or final phase of the filling process are compared with earlier measured values in an initial phase and/or final phase of the filling process in order to check the valve (20) or to determine an overrun quantity.

13. A filling device for filling a container (18) with a medium (14) under the control of a valve (20), the filling device comprising a flow sensor (24) and a control and evaluation unit (26) configured to close the valve (20) as soon as a predetermined filling quantity has been reached,
**characterized in that** the control and evaluation unit (26) determines the time for closing the valve (20) on the basis of an already filled filling quantity (22) that is determined by a method according to any of the preceding claims.

## Revendications

1. Procédé de commande d'un processus de remplissage, dans lequel une quantité de remplissage prédéterminée d'un fluide (14) est remplie dans un récipient (18), le débit du fluide (14) s'écoulant dans le récipient (18) étant mesuré en tant que série temporelle de valeurs de mesure pour le débit instantané et la quantité de remplissage (22) déjà remplie étant estimée à partir de là,
**caractérisé en ce qu'**au moins une valeur de mesure actuelle de la série temporelle est corrigée sur la base d'au moins une valeur de mesure antérieure d'une série temporelle antérieure de valeurs de mesure du débit d'un processus de remplissage antérieur.

2. Procédé selon la revendication 1,
dans lequel le processus de remplissage est lancé par l'ouverture d'au moins une vanne (20) et est terminé par la fermeture de la vanne (20).

3. Procédé selon la revendication 1 ou 2,
dans lequel le début d'un processus de remplissage est reconnu par le fait que le débit instantané mesuré dépasse une valeur seuil initiale.

4. Procédé selon l'une des revendications précédentes,
dans lequel la correction de la valeur de mesure actuelle est effectuée sur la base d'une valeur de mesure antérieure à un moment identique dans la série temporelle respective, en particulier par rapport à un début du processus de remplissage.

5. Procédé selon l'une des revendications précédentes,
dans lequel une pluralité de valeurs de mesure actuelles de la série temporelle sont corrigées, en particulier toutes les valeurs de mesure actuelles depuis le début du processus de remplissage.

6. Procédé selon l'une des revendications précédentes,
dans lequel la correction est effectuée à l'aide d'une pluralité prédéterminée de séries temporelles de valeurs de mesure antérieures du débit d'une pluralité de processus de remplissage.

7. Procédé selon l'une des revendications précédentes,
dans lequel la correction est déterminée à partir d'une mesure statistique à partir de valeurs de mesure antérieures, en particulier une valeur moyenne ou une médiane.

8. Procédé selon l'une des revendications précédentes,
dans lequel au moins une valeur de mesure antérieure est utilisée comme valeur d'entrée d'un filtre, en particulier un filtre FIR ou IIR, et le filtre estime une valeur de mesure actuelle corrigée sur la base des valeurs de mesure antérieures et de la valeur de mesure actuelle.

9. Procédé selon la revendication 8,
dans lequel des paramètres de filtrage et/ou des variables intermédiaires sont stockés à la place des valeurs de mesure antérieures.

10. Procédé selon l'une des revendications précédentes,
dans lequel la série temporelle et au moins une série temporelle antérieure sont disposées dans un champ 2D et traitées avec un noyau de filtre 2D pour corriger la valeur de mesure actuelle.

11. Procédé selon l'une des revendications précédentes,
dans lequel la valeur de mesure actuelle et la valeur de mesure actuelle corrigée sont comparées entre elles et, en cas d'écart dépassant un seuil de tolérance, une pondération entre la valeur de mesure actuelle et au moins une valeur de mesure antérieure est adaptée.

12. Procédé selon l'une des revendications précédentes,
dans lequel des valeurs de mesure actuelles dans une phase initiale et/ou une phase finale du processus de remplissage sont comparées à des valeurs de mesure antérieures dans une phase initiale et/ou une phase finale du processus de remplissage afin de contrôler la vanne (20) ou de déterminer une quantité de dépassement.

13. Dispositif de remplissage pour le remplissage d'un récipient (18) avec un fluide (14) commandé par une vanne (20), qui présente un capteur de débit (24) et une unité de commande et d'évaluation (26) configurée pour fermer la vanne (20) dès qu'une quantité de remplissage prédéterminée est atteinte, **caractérisé en ce que** l'unité de commande et d'évaluation (26) détermine le moment de la fermeture de la vanne (20) à l'aide d'une quantité de remplissage déjà remplie (22) qui est déterminée par un procédé selon l'une des revendications précédentes.
